# EUROPEAN PATENT APPLICATION

(11) **EP 4 700 943 A1**
(43) Date of publication of application: **25.02.2026**
(21) Application number: 24894497.7
(22) Date of filing: 12.11.2024
(51) Int. Cl.: H01M 50/264, H01M 50/204, H01M 50/509

(54) **BATTERY MODULE AND BATTERY PACK COMPRISING SAME**

(30) Priority: 20.11.2023 KR 20230161003
(71) Applicant: LG Energy Solution, Ltd., Seoul 07335 (KR)
(72) Inventor: KIM, Jong In, Daejeon 34122 (KR); LEE, Young Kyu, Daejeon 34122 (KR); LEE, Hyun Jong, Daejeon 34122 (KR)
(74) Representative: Plasseraud IP
(86) International application number: PCT/KR2024/017863
(87) International publication number: WO 2025/110604

(57) **Abstract**

A battery module of the present invention includes: a cell stack in which two or more battery cells are connected in series or parallel; a battery case in which the cell stack is accommodated; a magnet inserted into an insertion groove defined in each of both sidewalls of the battery case; and a coupling member provided between the magnet and the insertion groove to increase coupling force between the magnet and the insertion groove and perform buffering so that the insertion groove is not damaged by the magnet.

## Description

### TECHNICAL FIELD

### CROSS-REFERENCE TO RELATED APPLICATION

The present application claims the benefit of the priority of Korean Patent Application No. 10-2023-0161003, filed on November 20, 2023, which is hereby incorporated by reference in its entirety.

### TECHNICAL FIELD

The present invention relates to a battery module in which assemblability and workability are improved between battery modules, and the number of components is reduced to reduce costs and a volume, and a battery pack including the same.

### BACKGROUND ART

In general, secondary batteries refer to chargeable and dischargeable, unlike primary batteries that are not chargeable. The secondary batteries are being widely used for mobile phones, notebook computers, and camcorders, and the like.

The secondary batteries are classified into can-type secondary batteries in which an electrode assembly is built into a metal can, and pouch-type secondary batteries in which an electrode assembly is built into a pouch. The can-type secondary battery includes an electrode assembly, a can accommodating the electrode assembly, and a cap assembly mounted in an opening of the can. In addition, the pouch-type secondary battery includes an electrode assembly, a pouch accommodating the electrode assembly, and an electrode lead connected to the electrode assembly and withdrawn from the pouch.

The secondary batteries are commonly applied to portable devices as well as electric vehicles (EVs) or hybrid electric vehicles (HEVs) driven by an electric driving source.

That is, the battery pack is provided in the electric vehicle or hybrid vehicle, the battery pack includes a plurality of battery modules, and each of the battery modules includes a plurality of secondary batteries.

Here, the battery pack applied to the electronic vehicle or hybrid vehicle may be provided by connecting the plurality of battery modules in series or parallel according to required capacity. Here, the plurality of battery modules are assembled using coupling components including a blot and a bracket.

However, the conventional battery pack has a problem in that the number of components significantly increases as the number of battery modules increases. Particularly, there are problems in that it takes a lot of time in assembling or disassembling the plurality of battery modules, and thus, assemblability and workability are significantly deteriorated.

### DISCLOSURE OF THE INVENTION

### TECHNICAL PROBLEM

An object of the present invention is to provide a battery module, which is implemented as a battery module, to which a magnet is applied, to improve assemblability and workability between the battery modules and reduce costs and a volume thereof by reducing the number of components, and a battery pack including the same.

In addition, a coupling member may be disposed in an insertion groove, which is defined in a battery case of the battery module, and on a magnet to increase in coupling force between the magnet and the insertion groove and perform buffering so that the insertion groove is not damaged by the magnet.

### TECHNICAL SOLUTION

To achieve the above object, a battery module of the present invention may include: a cell stack in which two or more battery cells are connected in series or parallel; a battery case in which the cell stack is accommodated; a magnet inserted into an insertion groove defined in each of both sidewalls of the battery case; and a coupling member provided between the magnet and the insertion groove to increase coupling force between the magnet and the insertion groove and perform buffering so that the insertion groove is not damaged by the magnet.

The coupling member may be provided in a shape that surrounds a remaining surface of an end of the magnet, except for a front surface exposed to the outside.

The coupling member may be attached to an end of the magnet so as not to be separated from the magnet.
The coupling member may include: a rear portion configured to surround a rear surface facing the front surface of the magnet;
a side portion configured to surround each of both surfaces of the magnet and have one surface connected to the rear portion; and an end portion configured to surround an end surface of the magnet and have one side connected to each of the rear portion and the side portion.

The coupling member may be made of a material having an elastic modulus.

The coupling member may be made of a carbon fiber.

The coupling member may have a mesh shape in which carbon wires that are carbon fibers are woven roughly like a net.

The battery case may include: a horizontal accommodation part that is lengthily provided in a horizontal direction; and a vertical accommodation part that is lengthily provided in a vertical direction at one end of the horizontal accommodation part, wherein the insertion groove may be defined in at least three or more along an edge in each of both sidewalls of the horizontal accommodation part and defined in at least two or more along an edge in each of both sidewalls of the vertical accommodation part.

The magnet inserted into the insertion groove may be disposed on the same line as the sidewalls of the battery case so as not to protrude to the outside of the battery case.

The magnet may be provided as a neodymium (Nd) magnet.

A battery pack of the present invention may include a plurality of battery modules, wherein each of the battery modules may include: a cell stack in which two or more battery cells are connected in series or parallel; a battery case in which the cell stack is accommodated; a magnet inserted into an insertion groove defined in each of both sidewalls of the battery case; and a coupling member provided between the magnet and the insertion groove to increase coupling force between the magnet and the insertion groove and perform buffering so that the insertion groove is not damaged by the magnet, wherein the plurality of battery modules may be continuously coupled by the magnet provided on each of the sidewalls corresponding to each other.

The battery pack may further include a fixing plate configured to fix the plurality of battery modules so as not to be separated from each other, wherein the fixing plate may be provided on an outer surface of each of the plurality of battery modules and provided as a metal plate configured to fix the plurality of battery modules so as not to be separated from each other because the magnet provided on each of the plurality of battery modules is coupled.

The fixing plate may be inserted into a fixing groove defined in the outer surface of each of the plurality of battery modules, in which the magnet is disposed.

### ADVANTAGEOUS EFFECTS

The battery module of the present invention includes the battery case, in which the insertion groove is defined, the magnet inserted into the insertion groove, and the coupling member disposed between the insertion groove and the magnet. Due to this feature, the coupling force between the magnet and the insertion groove may increase, and the buffering may be performed to prevent the insertion groove from being damaged by the magnet.

In addition, in the battery module of the present invention, the coupling member may be provided in the form that surrounds the remaining surface of the end of the magnet except for the front surface that is exposed to the outside. Due to these features, the coupling force between the magnet and the insertion groove may increases, and the entire insertion groove that is in close contact with the end of the magnet may be stably protected.

In addition, in the battery module of the present invention, the coupling member may be made of the carbon fiber, which is the material having the elastic modulus. Due to these features, the coupling force between the magnet and the insertion groove may increase, and the buffering may be performed to prevent the insertion groove from being damaged by the magnet.

In addition, in the battery module of the present invention, the coupling member may have the mesh shape in which the carbon wires are woven roughly like a net. Due to this feature, the elastic modulus of the coupling member may significantly increase.

The battery pack of the present invention may further include the fixing plate that fixes several battery modules without separating the battery modules. Particularly, the fixing plate may be made of the metal plate. Thus, the coupling force of the plurality of battery modules may increase.

In addition, in the battery pack of the present invention, the fixing plate may be inserted into the fixing groove defined in the outer surface of the plurality of battery modules on which the magnet is disposed. Due to this feature, the movement phenomenon of the fixing plate may be significantly prevented.

### BRIEF DESCRIPTION OF THE DRAWINGS

FIG. 1 is a left perspective view of a battery module according to a first embodiment of the present invention.
FIG. 2 is a right perspective view of the battery module according to the first embodiment of the present invention.
FIG. 3 is an exploded perspective view of the battery module according to the first embodiment of the present invention.
FIG. 4 is a front view of FIG. 2.
FIG. 5 is an enlarged view of a portion A illustrated in FIG. 2.
FIG. 6 is an enlarged view of a portion B illustrated in FIG. 5.
FIG. 7 is a cross-sectional view taken along line C-C of FIG. 5.
FIG. 8 is a cross-sectional view taken along line D-D of FIG. 5.
FIG. 9 is a perspective view of a coupling member provided in the battery module according to the first embodiment of the present invention.
FIG. 10 is a perspective view of a battery pack according to a second embodiment of the present invention.
FIG. 11 is a perspective view of a battery back according to a third embodiment of the present invention.
FIG. 12 is a partial enlarged view of FIG. 11.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Battery module according to first embodiment of the present invention]

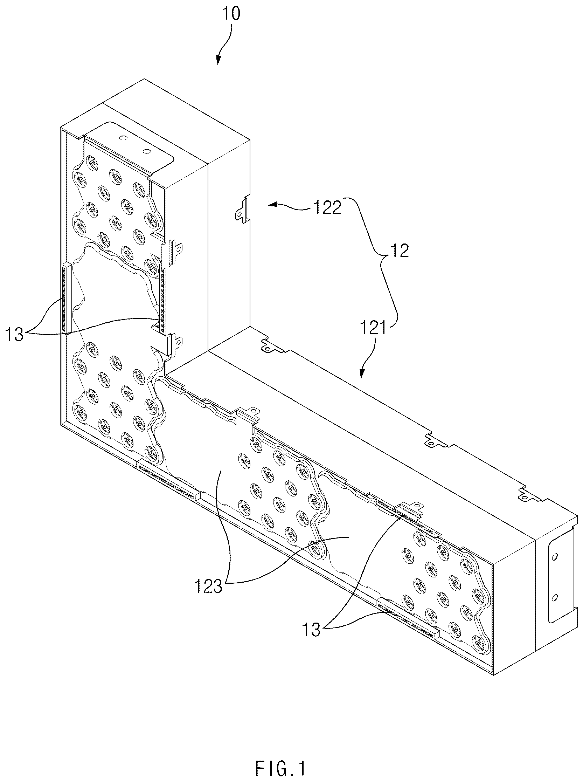

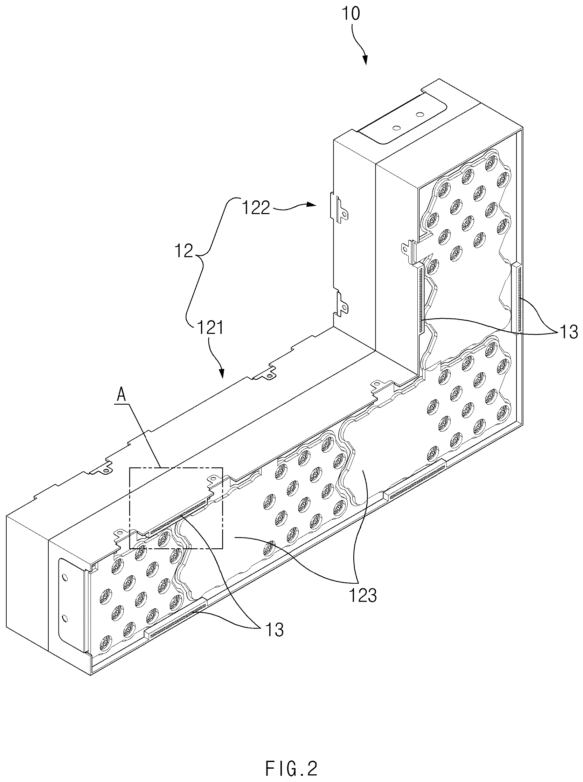

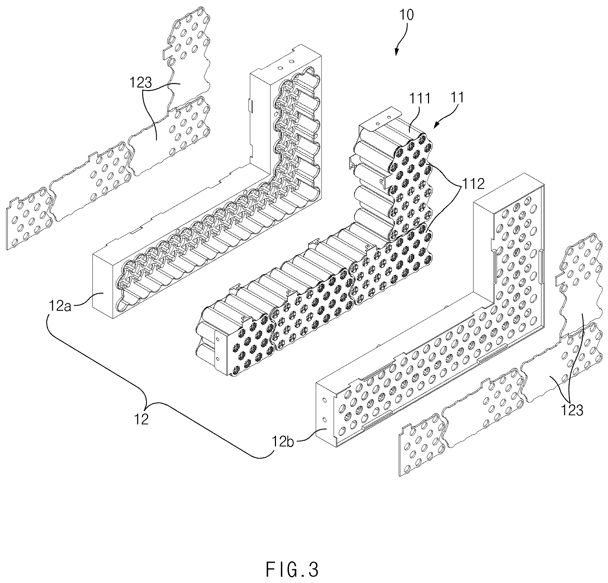

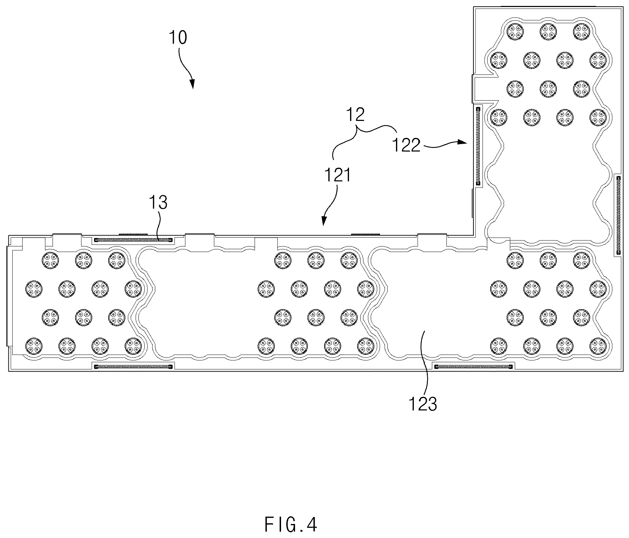

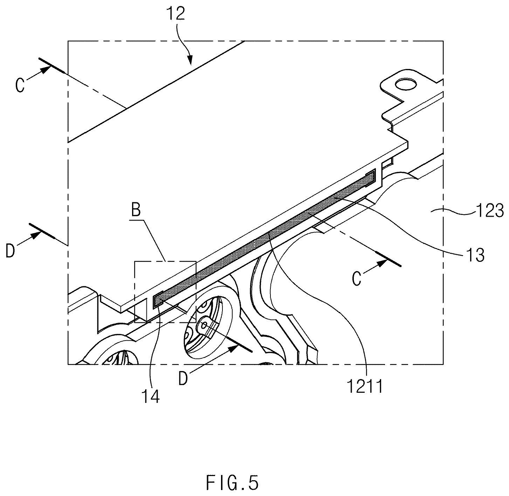

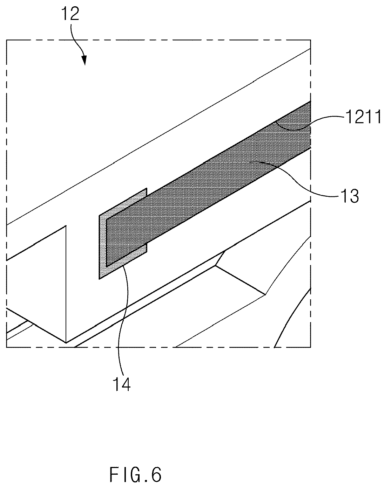

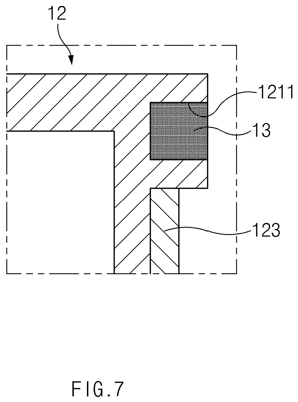

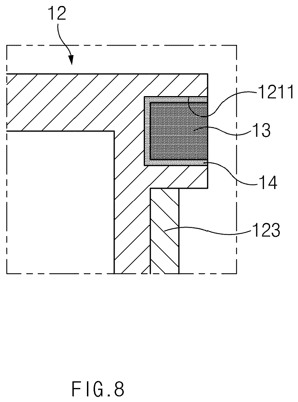

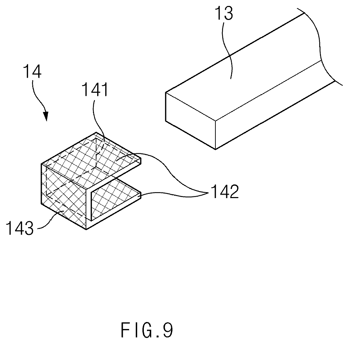

FIG. 1 is a left perspective view of a battery module according to a first embodiment of the present invention, FIG. 2 is a right perspective view of the battery module according to the first embodiment of the present invention, FIG. 3 is an exploded perspective view of the battery module according to the first embodiment of the present invention, FIG. 4 is a front view of FIG. 2, FIG. 5 is an enlarged view of a portion A illustrated in FIG. 2, FIG. 6 is an enlarged view of a portion B illustrated in FIG. 5, FIG. 7 is a cross-sectional view taken along line C-C of FIG. 5, FIG. 8 is a cross-sectional view taken along line D-D of FIG. 5, and FIG. 9 is a perspective view of a coupling member provided in the battery module according to the first embodiment of the present invention.

A battery module 10 according to the first embodiment of the present invention has a structure that improves assemblability and coupling property by applying a magnet 13.

Particularly, in the battery module 10 according to the first embodiment of the present invention, a coupling member 14 is disposed between a magnet 13 and an insertion groove 1211 of a battery case 12, into which the magnet 13 is inserted. That is, the coupling member 14 is disposed at a portion at which the magnet 13 and the insertion groove 1211 are supported. Thus, the coupling property between the magnet 13 and the insertion groove 1211 may increases, and damage of the insertion groove 1211, which is caused by the magnet 13, may be prevented by utilizing buffering force of the coupling member 14. This may improve marketability of the battery module 10, improve assemblability and workability, and reduce costs by reducing the number of components.

Hereinafter, the battery module according to the first embodiment of the present invention will be described in detail with reference to the attached drawings.

The battery module 10 according to the first embodiment of the present invention includes a cell stack 11, a battery case 12, a magnet 13, and a coupling member 14 as illustrated in FIGS. 1 to 3.

### Cell stack

The cell stack 11 has a structure in which two or more battery cells 111 are connected in series or parallel. For example, the two or more battery cells 111 are connected in series or parallel to constitute the cell stack according to capacity required for an electric vehicle or a hybrid vehicle.

That is, referring to FIG. 3, a portion of the plurality of battery cells 111 is connected by a connection plate 112 to match the capacity required for the electric vehicle or hybrid vehicle.

The battery cell 111 is provided as a can-type battery cell and includes an electrode assembly, a can that accommodates the electrode assembly, and a cap assembly mounted in an opening of the can.

The electrode assembly has a structure in which positive and negative electrodes are alternately disposed with a separator therebetween and are wound in the form of a jelly-roll.

### Battery case

The battery case 12 is configured to accommodate the electrical stack. That is, the battery case 12 may be provided by assembling one case 12a into which one end of the electrical stack is inserted, and the other case 12b into which the other end of the electrical stack is inserted.

The battery case 12 is made of a synthetic resin material having heat resistance and insulation to attach the plurality of battery cases 12 using the magnet 13.

As illustrated in FIGS. 1 and 2, a heat dissipation plate 123 that dissipates heat generated in the cell stack to the outside is provided at each of left and right sides of the battery case 12.

The insertion groove 1211 is defined in each of both sidewalls of the battery case 12 (left surface when viewed in FIG. 1, and right surface when viewed in FIG. 2), and the magnet 13 is inserted into the insertion groove 1211. Here, at least two, preferably three or more insertion grooves 1211 are provided at regular intervals along an edge of the battery case 12. Thus, stable magnetic force may be secured, and as a result, the plurality of battery modules may be coupled without separation.

The insertion groove 1211 may be lengthily defined long along the edge of the sidewall of the battery case 12 to secure a large length of the magnetic 13, and as a result, an attachment area between the battery modules may increase to improve the coupling force.

### Magnet

The magnet 13 is configured to attach the plurality of battery modules using magnetic force. That is, the magnet 13 is inserted into the insertion groove 1211 defined in the battery case 12.

The magnet 13 may be provided as a neodymium (Nd) magnet to secure strong magnetic force. Here, the neodymium magnet is a magnet that is 30% stronger than a normal magnet and has magnetic force of about 2,500 Gauss to about 5,000 Gauss. In addition, the neodymium magnet may be used up to 200°C.

For example, the battery case 12 may be provided in an "L" shape. That is, the battery case 12 includes a horizontal accommodation part 121 that is lengthily provided in a horizontal direction, and a vertical accommodation part 122 that is lengthily provided in a vertical direction at one end of the horizontal accommodation part 121. In addition, the insertion groove 1211 is defined in at least three or more along an edge in each of both sidewalls of the horizontal accommodation part 121 and defined in at least two or more along an edge in each of both sidewalls of the vertical accommodation part 122. In addition, the magnet 13 is inserted into each of five insertion holes 1211. Thus, when the battery modules are coupled to each other, the battery modules may be stably coupled by the five magnets 13 inserted into the edge of the battery case 12.

The magnet 13 inserted into the insertion groove 1211 may be disposed on the same line as the sidewall of the battery case 12 so as not to protrude to the outside of the battery case 12. Thus, the battery modules may be coupled to each other in a close contact state, and as a result, the coupling property may be improved.

### Coupling member

The coupling member 14 is provided between the insertion groove 1211 and the magnet 13 to increase in coupling force between the magnet 13 and the insertion groove 1211 and to perform buffering so that the insertion groove 1211 is not damaged by the magnet 13.

When inserting the magnet 13 into the insertion groove 1211 of the battery case 12, damage such as cracks may occur in the insertion groove 1211 due to strength of the magnet 13. Particularly, the damage may occur at an edge of the insertion groove 1211, on which an end of the magnetic 13 is supported. Due to this problem, the coupling force between the insertion groove 1211 and the magnet 13 was weakened, resulting in a problem of the magnet 13 being easily separated from the insertion groove 1211.

According to the present invention, to solve the above problem, the coupling member 14 may be disposed between the insertion groove 1211 and the magnet 13 to increase in coupling force between the magnet 13 and the insertion groove 1211 and prevent the insertion groove 1211 from being damaged by the magnet 13.

Here, the above-described coupling member 14 may be provided in a shape that surrounds a remaining surface of the end of the magnet 13 except for a front surface exposed to the outside. That is, the coupling member 14 may be disposed at only a portion, at which the magnet 13 and the insertion groove 1211 are supported, to reduce the costs.

For example, the coupling member 14 includes a rear portion 141 that surrounds a rear surface facing the front surface of the magnet 13, a side portion 142 that surrounds each of both surfaces of the magnet 13 and has one surface connected to the rear portion 141, and an end portion 143 that surrounds an end surface of the magnet 13 and has one side connected to each of the rear portion 141 and the side portion 142.

The above-described coupling member 14 may be attached to the end of the magnet 13 so as not to be separated from the magnet 13. For example, the coupling member 14 may be attached to the end of the magnet 13 using an adhesive or other adhesive means. Thus, the coupling member 14 may be stably disposed between the magnet 13 and the insertion groove 1211.

The above-described coupling member 14 may be made of a material having an elastic modulus. Thus, the coupling force and buffering force between the magnet 13 and the insertion groove 1211 may be obtained at the same time. For example, the coupling member 14 may be made of a carbon fiber. The carbon fiber has strength of 10 g/d to 20 g/d and specific gravity of 1.5 to 2.1. Particularly, the carbon fiber has excellent heat resistance and impact resistance, is strong against chemicals, and has high resistance to pests. In addition, in a heating process, molecules such as oxygen, hydrogen, and nitrogen are escaped to reduce a weight of the carbon fiber, and thus, the carbon fiber is lighter than a metal (aluminum), but has superior elasticity and strength compared to a metal (iron).

Particularly, the above-described coupling member 14 may have a mesh shape in which carbon wires that are carbon fibers are woven roughly like a net. Thus, the buffering force may greatly increase, and as a result, the damage of the insertion groove 1211, which is caused by the magnet 13, may be greatly prevented.

Therefore, in the battery module 10 according to the first embodiment of the present invention, the coupling member 14 may be disposed between the insertion groove 1211 of the battery case 12 and the magnet 13 to prevent the insertion groove 1211 from being damaged by the magnet 13.

Hereinafter, in descriptions of another embodiment of the present invention, constituents having the same function as the above-mentioned embodiment have been given the same reference numeral in the drawings, and thus duplicated description will be omitted.

### [Battery pack according to second embodiment of the present invention]

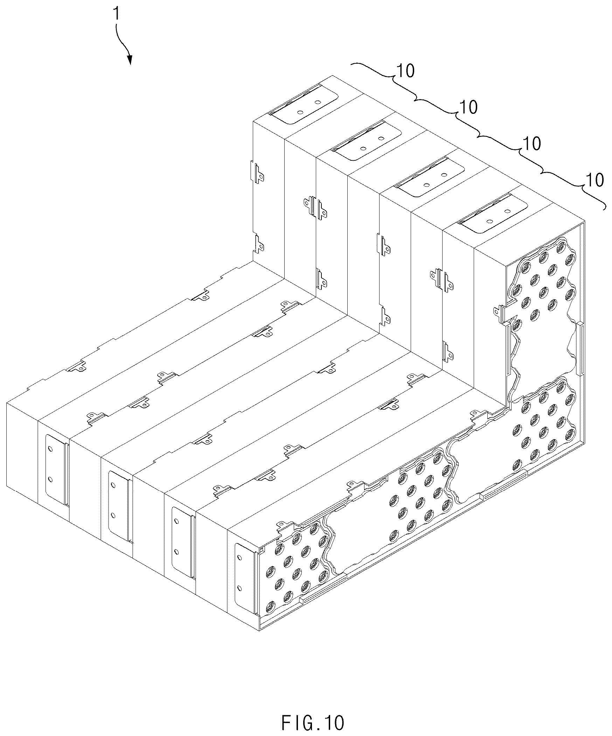

FIG. 10 is a perspective view of a battery pack according to a second embodiment of the present invention.

A battery pack 1 according to the second embodiment of the present invention has a structure in which the plurality of battery modules 10, which is described above, according to the first embodiment are coupled to each other.

That is, the battery pack 1 according to the first embodiment of the present invention includes a plurality of battery modules 10 as illustrated in FIG. 10.

The battery module 10 includes a cell stack 11 in which two or more battery cells 111 are connected in series or in parallel, a battery case 12 in which the cell stack 11 is accommodated, a magnet 13 inserted into an insertion groove 1211 defined in each of both sidewalls of the battery case 12, and a coupling member 14 provided between the magnet 13 and the insertion groove 1211 to increase in coupling force between the magnet 13 and the insertion groove 1211 and to perform buffering so that the insertion groove 1211 is not damaged by the magnet 13.

Here, the cell stack, the battery case 12, the magnet 13, and the coupling member 14 are identical to the cell stack, the battery case 12, the magnet 13, and the coupling member 14, which are provided in the battery module 10 according to the first embodiment, and thus, their detailed descriptions will be omitted.

The battery pack 1, which has the above-described structure, according to the second embodiment of the present invention may include the plurality of battery modules 10. Here, the plurality of battery modules 10 may be coupled by the magnet 13 provided on each of the sidewalls corresponding to each other, and thus, the plurality of battery modules 10 may be coupled in a line without a separate coupling means to improve assemblability and workability and reduce costs because there is no need to prepare the separate coupling component.

### [Battery pack according to third embodiment of the present invention]

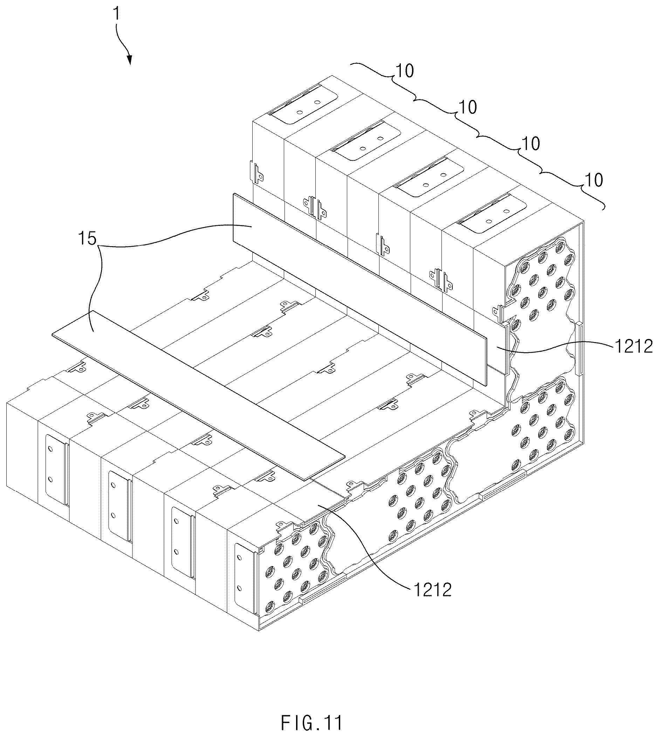

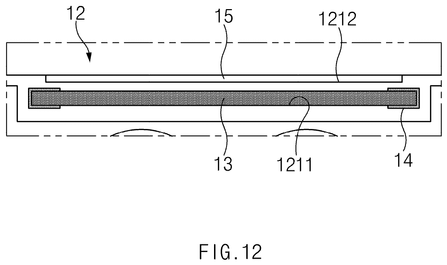

FIG. 11 is a perspective view of a battery back according to a third embodiment of the present invention, and FIG. 12 is a partial enlarged view of FIG. 11.

A battery pack 1 according to the third embodiment of the present invention includes a fixing plate 15 that improves coupling properties for a plurality of battery modules 10, as illustrated in FIGS. 11 and 12.

That is, the fixing plate 15 is provided as a metal plate and also is provided on an outer surface of each of the plurality of battery modules 10 and is coupled to a magnets 13 provided on each of the plurality of battery modules 10. In more detail, the plurality of battery modules 10 may be fixed in a state of being connected to each other using one fixing plate 15 to increase in coupling force.

The metal plate may be made of iron.

Thus, the battery pack 1 according to the third embodiment of the present invention may include the fixing plate 15 to increase in coupling force between the plurality of battery modules 10.

In the battery pack 1 according to the third embodiment of the present invention, a fixing groove 1212 may be defined in an outer surface of each of the plurality of battery modules 10, on which the magnet 13 is disposed, and the fixing plate 15 may be inserted into the fixing groove 1212. Thus, a movement phenomenon of the fixing plate 15 may be prevented, and the coupling property between the fixing plate 15 and the magnet 13 may be improved.

The outer surface of the fixing plate inserted into the fixing groove may be disposed on the same line as the outer surface of the battery case to prevent a height difference from occurring between the fixing plate and the battery case.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Battery pack
10: Battery module
11: Cell stack
111: Battery cell
112: Connection plate
12: Battery case
12a: One case
12b: The other case
121: Horizontal accommodation part
1211: Insertion groove
1212: Fixing groove
122: Vertical accommodation part
123: Heat dissipation plate
13: Magnet
14: Coupling member
141: Rear portion
142: Side portion
143: End portion
15: Fixing plate

## Claims

1. A battery module comprising:
a cell stack in which two or more battery cells are connected in series or parallel;
a battery case in which the cell stack is accommodated;
a magnet inserted into an insertion groove defined in each of both sidewalls of the battery case; and
a coupling member provided between the magnet and the insertion groove to increase coupling force between the magnet and the insertion groove and perform buffering so that the insertion groove is not damaged by the magnet.

2. The battery module of claim 1, wherein the coupling member is provided in a shape that surrounds a remaining surface of an end of the magnet, except for a front surface exposed to the outside.

3. The battery module of claim 1, wherein the coupling member is attached to an end of the magnet so as not to be separated from the magnet.

4. The battery module of claim 2, wherein the coupling member comprises:
a rear portion configured to surround a rear surface facing the front surface of the magnet;
a side portion configured to surround each of both surfaces of the magnet and have one surface connected to the rear portion; and
an end portion configured to surround an end surface of the magnet and have one side connected to each of the rear portion and the side portion.

5. The battery module of claim 1, wherein the coupling member is made of a material having an elastic modulus.

6. The battery module of claim 5, wherein the coupling member is made of a carbon fiber.

7. The battery module of claim 6, wherein the coupling member has a mesh shape in which carbon wires that are carbon fibers are woven roughly like a net.

8. The battery module of claim 1, wherein the battery case comprises:
a horizontal accommodation part that is lengthily provided in a horizontal direction; and
a vertical accommodation part that is lengthily provided in a vertical direction at one end of the horizontal accommodation part,
wherein the insertion groove is defined in at least three or more along an edge in each of both sidewalls of the horizontal accommodation part and defined in at least two or more along an edge in each of both sidewalls of the vertical accommodation part.

9. The battery module of claim 1, wherein the magnet inserted into the insertion groove is disposed on the same line as the sidewalls of the battery case so as not to protrude to the outside of the battery case.

10. The battery module of claim 1, wherein the magnet is provided as a neodymium (Nd) magnet.

11. A battery pack comprising a plurality of battery modules, wherein each of the battery modules comprises:
a cell stack in which two or more battery cells are connected in series or parallel;
a battery case in which the cell stack is accommodated;
a magnet inserted into an insertion groove defined in each of both sidewalls of the battery case; and
a coupling member provided between the magnet and the insertion groove to increase coupling force between the magnet and the insertion groove and perform buffering so that the insertion groove is not damaged by the magnet,
wherein the plurality of battery modules are continuously coupled by the magnet provided on each of the sidewalls corresponding to each other.

12. The battery pack of claim 11, further comprising a fixing plate configured to fix the plurality of battery modules so as not to be separated from each other,
wherein the fixing plate is provided on an outer surface of each of the plurality of battery modules and provided as a metal plate configured to fix the plurality of battery modules so as not to be separated from each other because the magnet provided on each of the plurality of battery modules is coupled.

13. The battery pack of claim 12, wherein the fixing plate is inserted into a fixing groove defined in the outer surface of each of the plurality of battery modules, in which the magnet is disposed.
